# Europäisches Patentamt
## European Patent Office
### Office européen des brevets

(19)

(11) Veröffentlichungsnummer: **0 235 841 B1**

(12) **EUROPÄISCHE PATENTSCHRIFT**

(45) Veröffentlichungstag der Patentschrift: **17.04.91**

(51) Int. Cl.⁵: **C01G 3/02**

(21) Anmeldenummer: **87200170.6**

(22) Anmeldetag: **04.02.87**

(54) **Verfahren zur Herstellung von Kupferhydroxid.**

(30) Priorität: **04.03.86 DE 3606920**

(43) Veröffentlichungstag der Anmeldung:
**09.09.87 Patentblatt 87/37**

(45) Bekanntmachung des Hinweises auf die
Patenterteilung:
**17.04.91 Patentblatt 91/16**

(84) Benannte Vertragsstaaten:
**BE CH DE ES FR GB IT LI SE**

(56) Entgegenhaltungen:
**FR-A- 2 107 940**
**US-A- 2 046 937**
**US-A- 2 536 096**

(73) Patentinhaber: **NORDDEUTSCHE AFFINERIE AG**
**Alsterterrasse 2**
**W-2000 Hamburg 36(DE)**

(72) Erfinder: **Langner, Bernd, Dr.**
**Schlehenweg 23**
**W-2090 Winsen /Luhe(DE)**
Erfinder: **Wilde, Rene-Holger**
**Heckkaten 56**
**W-2401 Badendorf(DE)**

(74) Vertreter: **Rieger, Harald, Dr.**
**Reuterweg 14**
**W-6000 Frankfurt am Main(DE)**

## Beschreibung

Die Erfindung betrifft ein Verfahren zur Herstellung von feinteiligem Kupferhydroxid aus metallisches Kupfer enthaltendem Material.

Kupferhydroxid ist ein technisch wichtiger Ausgangsstoff, der vor allem als wirksamer Bestandteil fungizider und insektizider Mittel Verwendung findet. Weitere Anwendungsgebiete sind der Einsatz in galvanischen Verkupferungsbädern und die Verwendung als Ausgangsstoff für Katalysatoren. Weiterhin dient Kupferhydroxid als reaktiver Ausgangsstoff für die Herstellung weiterer Kupfersalze, wie Kupferarsenat für die Holzschutzmittel-Industrie.

Es ist bekannt, Kupferhydroxid in zweistufigen Verfahren herzustellen, worin von einem vorgängig hergestellten Kupfersalz, wie Kupfersulfat, Kupfercarbonat, Kupferoxychlorid, ausgegangen wird und durch nachfolgende Fällung mit Alkalien bei Temperaturen üblicherweise unter $20°C$ Kupferhydroxid erhalten wird (US-A- 3 635 668, US-A-4 490 337, EP-B- 80 226). Die Nachteile der vorgenannten Verfahren sind darin zu sehen, daß zunächst als Zwischenprodukt immer ein Kupfersalz benötigt wird und bei der Fällung mit Alkalien erhebliche Mengen an Abwasser entstehen, die für die Entsorgung aufbereitet werden müssen. Gemäß der US-A- 2 536 096 wird in einem einstufigen Verfahren Kupferhydroxid direkt aus Kupferschrott in ammoniakalischer Lösung bei Ammoniak-Konzentrationen von größer als l0 g/l und vorzugsweise größer als 30 g/l hergestellt. Hierbei lagert sich das entstehende Hydroxid zunächst auf der Kupferoberfläche ab und wird durch Reibung ständig von der Kupferoberfläche entfernt. Dieses Verfahren weist andere Nachteile auf: Nur bei hohen Ammoniak-Konzentrationen sind die Laugungsgeschwindigkeiten ausreichend groß, so daß ein Wäscher oder ein vollständig gekapseltes Reaktionsgefäß erforderlich ist. Ferner enthält das Produkt noch erhebliche Mengen an Ammoniak, die durch große Wassermengen ausgewaschen werden müssen. Des weiteren treten erhebliche Arbeitsplatz- und Umweltbelästigungen durch Ammoniak auf.

Der Erfindung liegt die Aufgabe zugrunde, die Nachteile der insbesondere vorgenannten Verfahren zu vermeiden und ein wirtschaftliches Verfahren zur Herstellung von feinteiligem Kupferhydroxid hoher Schwebefähigkeit ohne Abwasserprobleme bereitzustellen. Hierzu geht die Erfindung von einem einstufigen Herstellungsverfahren aus. Bei einem Verfahren der genannten Art zur Herstellung von blauem Kupferhydroxid durch Behandeln von metallischem Kupfer mit einer wäßrigen, Ammoniumionen enthaltenden Lösung unter Einleiten von sauerstoffhaltigem Gas unter Rühren sowie Abtrennen des Reaktionsproduktes vom metallischen Kupfer besteht die Erfindung darin, daß zur Herstellung von feinteiligem, schwebefähigem Kupfer-II-hydroxid metallisches Kupfer enthaltendes Material mit einer Lösung enthaltend

0,l bis l0 g/l Ammoniumsalz (als $NH_4$ gerechnet) und

0 bis l0 g/l Ammoniumhydroxid (als $NH_3$ gerechnet) sowie gegebenenfalls

0 bis 5 g/l Kupfer-II-salz

bei einer Temperatur von 0 bis $40°C$ behandelt und das gebildete Kupfer-II-hydroxid abgetrennt wird.

Es wurde gefunden, daß schon allein die Anwesenheit von Ammoniumsalzen in der Behandlungslauge ausreichend ist, um das metallische Kupfer bei Temperaturen unter $40°C$ und vorzugsweise bei 0 bis $30°C$ zur Reaktion zu bringen und feinteiliges blaues Kupferhydroxid auszufällen. Ein derartiges Material weist eine hervorragende Schwebefähigkeit in der Suspension auf.

Das als Ausgangsstoff verwendete kupferhaltige Material kann in Form von Kupferschrott, beispielsweise aus Shredder-Anlagen, in Form von Drahtabschnitten oder Granulaten vorliegen. Geeignetes Schrottmaterial sind beispielsweise Kupferdrahtabschnitte von etwa l bis 5 mm Länge und etwa 0,l bis l mm Dicke.

Es ist zweckmäßig, die Behandlungslauge mit dem kupferhaltigen Material kräftig zu rühren, und zwar mit solcher Heftigkeit, daß im wesentlichen das gesamte Ausgangsmaterial aufgewirbelt wird.

Das Ammoniumsalz ist in einer Menge von 0,l bis l0 g/l und vorzugsweise 0,5 bis 6 g/l (jeweils als $NH_4$ gerechnet) in der wäßrigen Lauge enthalten. Als Ammoniumsalz werden zweckmäßig Ammoniumchlorid, -sulfat, -phosphat, -nitrat oder - acetat einzeln oder zu mehreren verwendet. Es können aber auch Ammoniumsalze anderer anorganischer oder organischer Säuren einzeln oder zu mehreren verwendet werden. In manchen Fällen kann es zur Steigerung der Reaktionsgeschwindigkeit von Vorteil sein, der wäßrigen, Ammoniumsalz enthaltenden Lauge noch geringe Mengen Ammoniumhydroxid zuzusetzen. Dieser Anteil beträgt maximal l0 g/l und liegt im allgemeinen bei 0,5 bis 8 g/l (jeweils als $NH_3$ gerechnet).

Nach einer weiteren Ausführungsform der Erfindung kann die Behandlungslauge noch eine geringe Menge eines Kupfer-II-salzes enthalten, beispielsweise Kupfersulfat oder -nitrat. Diese Menge beträgt höchstens 5 g/l (als Cu(II) gerechnet) und dient zu einer gleichmäßigen Initiierung der Reaktion.

Der Sauerstoff oder das sauerstoffhaltige Gas wird zweckmäßig in der Lauge feinverteilt, beispielsweise durch Einbringen über Fritten oder perforierte Platten, oder durch ein Rohr, wenn die Verteilung über das Rührsystem erfolgt. Der Sauerstoff kann als reines Gas oder in Verdünnung mit inerten Gasen zur Anwendung gelangen. Zweckmäßig kann Luft oder mit Sauerstoff angereicherte Luft als Sauerstoffquelle benutzt werden. Der Druck in dem Reaktionsgefäß ist nicht kritisch. Zweckmäßig wird das metallisches Kupfer enthaltende Ausgangsmaterial bei Atmosphärendruck behandelt, doch können auch erhöhte Drücke angewendet werden.

Die Laugungsbehandlung des metallischen Kupfers kann absatzweise oder im kontinuierlichen oder halbkontinuierlichen Betrieb erfolgen.

Nach beendeter Laugungsbehandlung, die in Abhängigkeit von der Korngröße des Ausgangsmaterials, Menge und Art der Behandlungskomponenten sowie der Behandlungstemperatur zwischen etwa 6 und etwa 20 Stunden liegen kann, wird die Suspension des blauen feinteiligen Kupferhydroxids von dem nicht umgesetzten metallischen Kupfer abgetrennt und aus der Suspension das Kupferhydroxid abfiltriert und getrocknet. Bei der Trocknung darf das Gut keine Temperatur über $110\,^{\circ}$C annehmen. Es ist im allgemeinen nicht notwendig, das Kupferhydroxid auszuwaschen, da die Behandlungslauge ohnehin nur geringe Mengen der Behandlungskomponenten enthält. Das Kupferhydroxid besitzt in der Suspension aufgrund siener Feinheit eine hohe Schwebefähigkeit. Diese Eigenschaft ist insbesondere bei der Verwendung des erfindungsgemäß hergestellten Kupferhydroxids als Wirkstoff in fungiziden oder insektiziden Mitteln von wesentlicher Bedeutung. Die Teilchengröße des erfindungsgemäß hergestellten Kupferhydroxids liegt unter 30 $\mu$m.

Die Vorteile des erfindungsgemäßen Verfahrens sind in der ebenso einfachen wie wirtschaftlichen einstufigen Herstellung eines feinteiligen, schwebefähigen Kupferhydroxids zu sehen, bei welchen Verfahren keine aufzubereitenden Abwässer anfallen.

Die Erfindung wird anhand der nachstehenden Beispiele näher und beispielhaft erläutert.

Beispiel I

In einen offenen Reaktor, versehen mit schnellaufendem Rührwerk und einem porösen Gaseinleitungskörper am Boden des Gefäßes, wurden I,5 l einer wäßrigen Behandlungslauge eingefüllt, enthaltend I g/l $NH_3$, I g/l $(NH_4)_2SO_4$ und 4 g/l $CuSO_4 \bullet 5H_2O$. Die Lauge wirde mit 260 g Kupferdrahtabschnitten (l = 3 mm, d = 0,5 mm) versetzt und bei Raumtemperatur unter Rühren und Einblasen von Sauerstoff gelaugt, wobei die Temperatur aufgrund der Reaktionswärme während der Laugung auf etwa $30\,^{\circ}$C anstieg. Nach 7 Stunden war der Kupfergehalt der Kupferhydroxid-Suspension auf 66 g/l angestiegen, wobei weniger als 300 mg/l Cu in Lösung vorlagen. Nach der Reaktion wurde die Suspension über ein Sieb gegeben, um das restliche metallische Kupfer vom Kupferhydroxid abzutrennen. Das abfiltrierte Kupferhydroxid wies eine Schwebefähigkeit von 9I % nach 30 Minuten auf und enthielt nach der Trocknung bei $60\,^{\circ}$C 66,7 % Cu. Wird bei der Reaktion eine Kühlung auf eine Temperatur von etwa $20\,^{\circ}$C vorgenommen, so werden im wesentlichen die gleichen Ergebnisse erhalten.

Beispiel 2

Es wurden Bedingungen wie in Beispiel I eingestellt, wobei als Startlauge eine wäßrige Lösung mit I g/l $NH_3$, I g/l $NH_4NO_3$ und 3,8 g/l $Cu(NO_3)_2 \bullet 3H_2O$ eingesetzt wurde. Nach 6 Stunden war der Kupfergehalt der Kupferhydroxid-Suspension auf 40 g/l angestiegen. Das blaue seidig glänzende Produkt wies eine Schwebefähigkeit von 89 % auf und enthielt nach dem Trocknen 66 % Cu.

Beispiel 3

Es wurde entsprechend Beispiel I vorgegangen, jedoch wurde als Startlauge eine solche mit I g/l $NH_3$, I g/l $NH_4Cl$ und 4 g/l $CuSO_4 \bullet 5H_2O$ eingesetzt. Nach 6 Stunden wurde die blaue Kupferhydroxid-Suspension mit 58 g/l $Cu(OH)_2$ filtriert. Das Produkt wies eine Schwebefähigkeit von 96 % und einen Kupfergehalt von 67,I % auf.

Beispiel 4

Es wurde entsprechend Beispiel I vorgegangen, jedoch wurde als Startlauge eine solche mit I g/l $NH_4Cl$ und I g/l $(NH_4)_2SO_4$ eingesetzt, und die Reaktionsmischung wurde druch Kühlung auf einer Temperatur von I8$\,^{\circ}$C gehalten. Nach 6 Stunden waren I05 g/l $Cu(OH)_2$ in der blauen Suspension enthalten, und das Produkt enthielt nach dem Trocknen 65 % Cu und wies eine Schwebefähigkeit von 78 % auf.

Beispiel 5

Es wurde entsprechend dem Beispiel I gearbeitet, jedoch wurde als Startlauge eine solche mit 5 g/l $NH_4Cl$ und I g/l $(NH_4)_2SO_4$ verwendet. Die Reaktionsmischung wurde durch Kühlung auf einer Temperatur von I8$\,^{\circ}$C gehalten. Nach 20 Stunden hatten sich I32 g/l Cu umgesetzt. Das abfiltrierte Kupferhydroxid wies nach dem Trocknen einen Kupfergehalt von 64 % und eine Schwebefähigkeit von 93 % auf.

Beispiel 6

Es wurde entsprechend dem Beispiel I gearbeitet, jedoch wurde als Startlauge eine solche mit 5 g/l $NH_4Cl$ und I g/l $(NH_4)_2SO_4$ und I g/l Ammoniak verwendet. Die Reaktionsmischung wurde durch Kühlung auf einer Temperatur von I8°C gehalten. Nach 6 Stunden hatten sich I3I g/l Cu umgesetzt. Das abfiltrierte Kupferhydroxid wies nach dem Trocknen einen Kupfergehalt von 64% auf.

**Ansprüche**

1. Verfahren zur Herstellung von blaumen Kupferhydroxid durch Behandeln von metallischem Kupfer mit einer wäßrigen, Ammoniumionen enthaltenden Lösung unter Einleiten von sauerstoffhaltigem Gas unter Rühren, sowie Abtrennen des Reaktionsproduktes vom metallischen Kupfer,
dadurch gekennzeichnet,
daß zur Herstellung von feinteiligem schwebefähigem Kupfer-II-hydroxid metallisches Kupfer enthaltendes Material mit einer Lösung enthaltend

0,I bis I0g/l Ammoniumsalz (als $NH_4$ gerechnet) und
0 bis I0g/l Ammoniumhydroxid (als $NH_3$ gerechnet) sowie gegebenenfalls
0 bis 5 g/l Kupfer-II-salz

bei einer Temperatur von 0 bis 40°C behandelt und das gebildete Kupfer-II-hydroxid abgetrennt wird.

2. Verfahren nach Anspruch I, dadurch gekennzeichnet , daß als Ammoniumsalz Ammoniumchlorid, -sulfat, -phosphat, -nitrat oder -acetat einzeln oder zu mehreren verwendet werden.

3. Verfahren nach den Ansprüchen I bis 2, dadurch gekennzeichnet , daß die Behandlung bei einer Temperatur von 0 bis 30°C durchgeführt wird.

**Claims**

1. Process for producing blue copper hydroxide by treating metallic copper with an aqueous solution containing ammonium ions with the introduction of oxygen-containing gas while stirring, and also separation of the reaction product from the metallic copper,
characterised in that
in order to produce finely divided suspendible copper II hydroxide, material containing metallic copper is treated with a solution containing

0.1 to 10 g/l ammonium salt (calculated as $NH_4$) and
0 to 10 g/l ammonium hydroxide (calculated as $NH_3$) and optionally
0 to 5 g/l copper II salt

at a temperature of 0 to 40°C and the resulting copper II hydroxide is separated off.

2. Process according to Claim 1, characterised in that ammonium chloride, ammonium sulphate, ammonium phosphate, ammonium nitrate or ammonium acetate, singly or in combination, is used as the ammonium salt.

3. Process according to Claims 1 to 2, characterised in that the treatment is carried out at a temperature of 0 to 30°C.

**Revendications**

1. Procédé de préparation d'hydroxyde de cuivre bleu, en traitant du cuivre métallique par une solution aqueuse contenant des ions ammonium, avec introduction de gaz contenant de l'oxygène sous agitation, ainsi qu'en séparant le produit de réaction du cuivre métallique,
caractérisé,
en ce qu'il consiste, pour préparer de l'hydroxyde de cuivre II, à l'état finement divisé et susceptible d'être mis en suspension, à traiter une substance contenant du cuivre métallique par une solution contenant

de 0,1 à 10 g/litre de sel d'ammonium (exprimés en $NH_4$) et
de 0 à 10 g/litre d'hydroxyde d'ammonium (exprimé en $NH_3$) ainsi que, le cas échéant,
de 0 à 5 g/litre de sels de cuivre II

à une température de 0 à 40°C et à séparer l'hydroxyde de cuivre II formé.

2. Procédé suivant la revendication 1, caractérisé en ce qu'il consiste à utiliser, comme sel d'ammonium, du chlorure d'ammonium, du sulfate d'ammonium, du phosphate d'ammonium, du nitrate d'ammonium ou de l'acétate d'ammonium, seul ou en combinaison.

3. Procédé suivant l'une des revendications 1 à 2, caractérisé en ce qu'il consiste à effectuer le traitement à une température de 0 à 30°C.